# EUROPEAN PATENT APPLICATION

(11) **EP 4 769 451 A1**
(43) Date of publication of application: **01.07.2026**
(21) Application number: 24940495.5
(22) Date of filing: 26.11.2024
(51) Int. Cl.: H01B 12/10, H01B 12/02

(54) **CUNB COMPOSITE ROD FOR LOW-LOSS SUPERCONDUCTING WIRE AND MANUFACTURING METHOD THEREFOR**

(30) Priority: 06.05.2024 CN 202410545522
(71) Applicant: Xi'an Superconducting Wire Technologies Co., Ltd., Xi'an, Shaanxi 713703 (CN)
(72) Inventor: GUO, Qiang, Xi'an, Shaanxi 713703 (CN); LI, Pengju, Xi'an, Shaanxi 713703 (CN); SHI, Yigong, Xi'an, Shaanxi 713703 (CN); HAN, Guangyu, Xi'an, Shaanxi 713703 (CN); WANG, Chunguang, Xi'an, Shaanxi 713703 (CN); LI, Zheng, Xi'an, Shaanxi 713703 (CN); CHEN, Jianya, Xi'an, Shaanxi 713703 (CN); XIN, Yang, Xi'an, Shaanxi 713703 (CN); LIU, Xianghong, Xi'an, Shaanxi 713703 (CN); YAN, Guo, Xi'an, Shaanxi 713703 (CN); FENG, Yong, Xi'an, Shaanxi 713703 (CN)
(74) Representative: Lin Chien, Mon-Yin
(86) International application number: PCT/CN2024/134603
(87) International publication number: WO 2025/232153

(57) **Abstract**

The disclosure belongs to the technical field of superconducting wires, and discloses a CuNb composite rod for a low-loss superconducting wire and a manufacturing method therefor. The CuNb composite rod has a multi-level structure specific arranged by Sn rods, CuNb single-core rods and Cu tube, where each CuNb single-core rod is closely in contact with a maximum of four CuNb single-core rods, and a minimum of one Sn rod. The atomic ratio of Nb/Sn is 2.7-3.1, of Sn/(Sn + Cu) is 0.23-0.37; the volume ratio of Nb is 45-59%, of Sn is 22-27%. The Cu tubes are distributed between the close-packed CuNb single-core rods and Sn rods, thus reducing mutual contact between the Nb rods, and enhancing the overall heat conduction capability of the wire. While reducing hysteresis losses, the present disclosure ensures that Nb₃Sn superconducting wire has a relatively high critical current-carrying capacity and a practical application value.

## Description

### TECHNICAL FIELD

The present disclosure belongs to the technical field of superconducting wires and relates to a CuNb composite rod for low-loss superconducting wires and a preparation method therefor.

### BACKGROUND

Nb₃Sn superconducting materials are used in large-scale scientific facilities such as the International Thermonuclear Experimental Reactor (ITER) and the Circular Electron-Positron Collider (CEPC), and are also one of the required materials for magnetic field devices such as magnetic resonance imaging equipment (MRI) and high-frequency nuclear magnetic resonance spectrometers (NMR), with a wide range of applications. To ensure that Nb₃Sn superconducting wires have an ultra-high critical current density in a low-temperature and ultra-high magnetic field environment, while also being able to adapt to a rapidly changing magnetic field environment, it is necessary for Nb₃Sn superconducting wires to have low losses.

The losses of Nb₃Sn superconducting wires mainly include AC losses, eddy current losses, and thermal losses, among which AC losses mainly come from the surface eddy currents of Nb₃Sn core filaments, core filament coupling, and dynamic resistance. Therefore, it is of great significance to prepare CuNb composite rods with low losses and high performance for Nb₃Sn superconducting wires by reducing the coupling losses between Nb₃Sn core filaments.

### SUMMARY

The present disclosure aims to provide a CuNb composite rod for Nb₃Sn superconducting wires with high critical current carrying performance and capable of effectively reducing the overlapping of Nb core wires, thereby reducing the overall loss of the wires.

According to the above aims, the present disclosure provides a preparation method of a low-loss CuNb composite rod for Nb₃Sn superconducting wires.

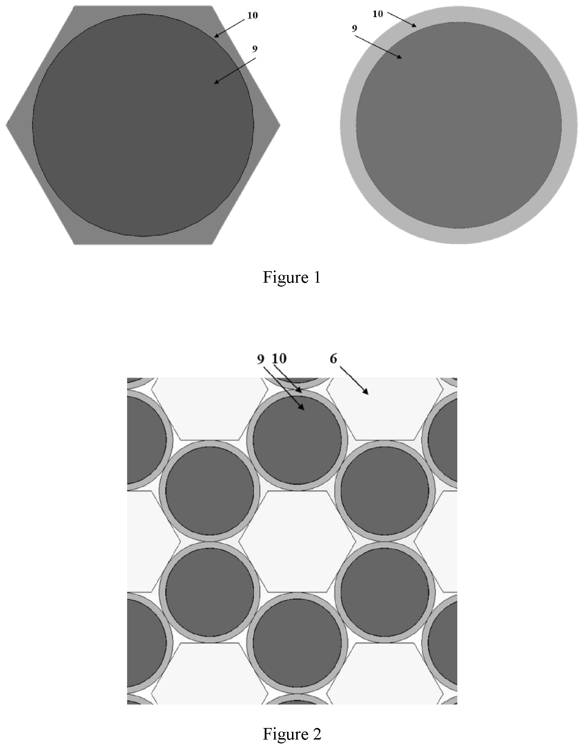

The method includes the following steps: 1) inserting Nb rods respectively into small Cu tubes to prepare CuNb single-core rods. The cross-sectional structure diagram of the CuNb single-core rods is shown in Figure 1, where the left figure in Figure 1 is a preferred hexagonal CuNb single-core rod and the right figure in Figure 1 is a preferred circular CuNb single-core rod.

2) Close-packing the CuNb single-core rods and Sn rods into a 1st-level Cu tube to form a 1-level CuNb composite structure. In the 1-level CuNb composite structure, the preferred close-packing arrangement of the CuNb single-core rods and Sn rods is shown in Figure 2. As shown in Figure 2, the cross-section of the Sn rods is preferably hexagonal, and more preferably regular hexagonal. With the Sn rods as the close-packing center, one CuNb single-core rod is arranged on each side of the Sn rods. As shown in Figure 2, six CuNb single-core rods are close-packing around the Sn rods.

3) Along the circumference of the 1st-level Cu tube, close-packing the CuNb single-core rods and Sn rods around the outside of the 1-level CuNb composite structure and inserting them into a 2nd-level Cu tube to form a 2-level CuNb composite structure. As a preferred arrangement method, with the Sn rods as the close-packing center, one CuNb single-core rod is arranged on each side of the Sn rods.

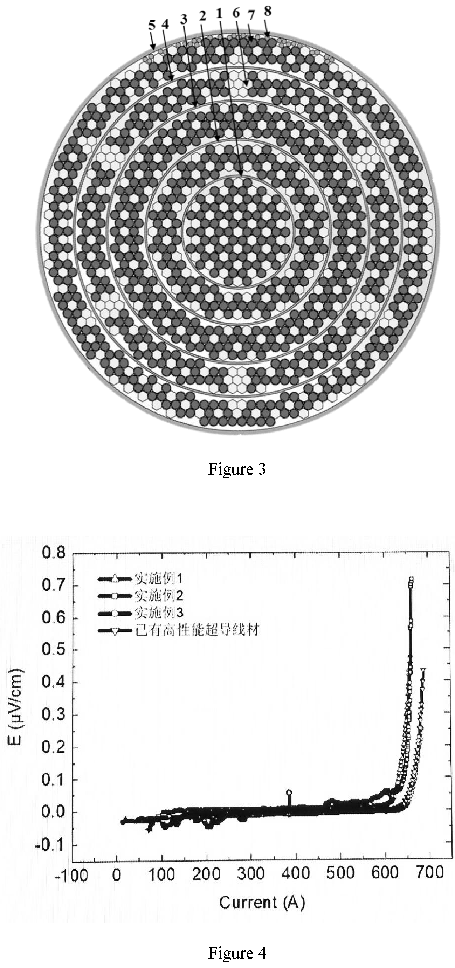

4) Repeating the assembly method of step 3) multiple times to prepare multi-level CuNb composite structures. As shown in Figure 3, a preferred 5-level CuNb composite structure is provided. In Figure 3, 1 to 5 represent the 1st-level to 5th-level Cu tubes, respectively.

5) Multi-pass reverse stretching and straightening the multi-level CuNb composite structure, and then cutting the multi-level CuNb composite structure to a fixed length to obtain CuNb composite rods.

Further, in step 1) of the above method, the Nb rods are circular with a diameter of 0.92~1.8 mm, and the CuNb single-core rods are hexagonal or circular, with a diameter or opposite side distance of 1.0~2.8 mm, and a copper ratio of 0.1~0.32.

Further, the Sn rods are composed of SnCu alloy doped with 0.5% Cu atoms, with a diameter of 1.0 mm; the 1st-level to 5th-level Cu tubes are oxygen-free copper tubes with a wall thickness of 0.3 to 1.2 mm, distributed between the close-packed CuNb single-core rods and Sn rods, and the internal gaps of each level of Cu tubes are filled with Cu rods with a diameter of Φ = 1.0 mm. The filling rate of the multi-level CuNb composite structure is 81~ 95%.

Further, in the multi-level CuNb composite structure, each CuNb single-core rod is closely in contact with a maximum of 4 CuNb single-core rods and a minimum of 1 Sn rod, and there are a maximum of 4 layers of CuNb single-core rods along the radial direction between each level of Cu tubes.

Further, in the multi-level CuNb composite structure, the Nb/Sn atomic ratio is 2.7~3.1, the Sn/(Sn + Cu) atomic ratio is 0.23~0.37, the volume ratio of Nb is 45~59%, and the volume ratio of Sn is 22~27%.

Further, the outer diameter Φ of the multi-level CuNb composite structure is 75~200 mm.

Further, the reduction rate of each pass of reverse stretching is less than or equal to 30%, and the straightening accuracy is 0.1~0.3 mm/m.

Further, after processing, the diameter of the CuNb composite rod is Φ = 3 to 6.6 mm.

In addition, the present disclosure also requests protection for a CuNb composite rod for low-loss Nb₃Sn superconducting wires prepared by the above method.

Compared with the existing technology, the technical solution provided by the present disclosure has at least the following beneficial effects:

The present disclosure provides a preparation method for CuNb composite rods used in low-loss Nb₃Sn superconducting wires. This method ensures that the CuNb composite rods still have high critical current performance without reducing the Nb content and the elemental ratio distribution in the CuNb composite rods. In the CuNb composite rods, each CuNb single-core rod is closely in contact with at most 4 CuNb single-core rods. Compared with the original scheme where each CuNb single-core rod is closely in contact with 6 CuNb single-core rods, the overlapping of Nb core wire during the formation of Nb₃Sn is greatly ameliorated.

Meanwhile, Cu tubes are distributed between the close-packed CuNb single-core rods and Sn rods, further reducing the probability of contact between Nb rods and enhancing the overall heat conduction capacity of the wire. The present disclosure reduces the hysteresis loss caused by Nb core wires while ensuring high critical current capacity of the Nb₃Sn superconducting wires, and has practical application value.

### ILLUSTRATED DESCRIPTION

Figure 1 shows the cross-sectional structure diagrams of two shapes of CuNb single-core rods. The left diagram in Figure 1 is a hexagonal CuNb single-core rod, and the right diagram in Figure 1 is a circular CuNb single-core rod.
Figure 2 illustrates the close-packed arrangement of CuNb single-core rods and Sn rods in a 1-level CuNb composite structure.
Figure 3 presents a schematic diagram of a multi-level CuNb composite rod.
Figure 4 shows a comparison diagram of the critical current performance results of Examples 1 to 3 with existing Nb₃Sn superconducting wire.

Figure identification: 1 to 5 correspond to the Cu tubes used in the 1 to 5-level CuNb composite structures respectively; 6 is the Sn rod; 7 is the CuNb single-core rod; 8 is the Cu insert rod; 9 is the Nb rod; 10 is the small Cu tube.

### DETAILED DESCRIPTION

The following describes in detail and comprehensively the technical solution of the present disclosure based on the embodiments. It is obvious that the described embodiments are only a part of the embodiments of the present disclosure, rather than all the embodiments. Based on the embodiments of the present disclosure, all other embodiments obtained by ordinary technicians in the field without making creative efforts are within the protection scope of the present disclosure.

The embodiments of the present disclosure provide a preparation method for a CuNb composite rod used in low-loss Nb₃Sn superconducting wire. The method includes:
1) Inserting Nb rods 9 respectively into small Cu tubes 10 to prepare CuNb single-core rods 7. The cross-sectional structure diagram of the CuNb single-core rods 7 is shown in Figure 1, where the left figure in Figure 1 is a preferred hexagonal CuNb single-core rod and the right figure in Figure 1 is a preferred circular CuNb single-core rod.
2) Close-packing the CuNb single-core rods 7 and Sn rods 6 into a 1st-level Cu tube 1 by a specific form to form a 1-level CuNb composite structure. In the 1-level CuNb composite structure, the preferred close-packing form of the CuNb single-core rods 7 and Sn rods 6 is shown in Figure 2. As shown in Figure 2, the cross-section of the Sn rods 6 is preferably hexagonal, and more preferably regular hexagonal. With the Sn rods 6 as the close-packing center, one CuNb single-core rod 7 is arranged on each side of the Sn rods 6. As shown in Figure 2, six CuNb single-core rods 7 are close-packed around the Sn rods 6.
3) Along the circumference of the 1st-level Cu tube, close-packing the CuNb single-core rods 7 and Sn rods 6 around the outside of the 1-level CuNb composite structure by a specific form and inserting them into a 2nd-level Cu tube 2 to form a 2-level CuNb composite structure. As a preferred arrangement method, with the Sn rods 6 as the close-packing center, one CuNb single-core rod 7 is arranged on each side of the Sn rods 6.
4) Repeating the assembly method of step 3) multiple times to prepare multi-level CuNb composite structures. As shown in Figure 3, a preferred 5-level CuNb composite structure is provided. In Figure 3, 1 to 5 represent the 1st-level to 5th-level Cu tubes, respectively.
5)Multi-pass reverse stretching and straightening the multi-level CuNb, and then cutting the multi-level CuNb to a fixed length to obtain CuNb composite rods.

Further, in step 1) of the above method, the Nb rods 9 are circular with a diameter of 0.92~1.8 mm, and the CuNb single-core rods 7 are hexagonal or circular with a diameter or opposite side distance of 1.0~2.8 mm and a copper ratio of 0.1~0.32.

Further, the Sn rods 6 are composed of SnCu alloy doped with 0.5% Cu atoms, with a diameter of 1.0 mm; the 1st-level to 5th-level Cu tubes are oxygen-free copper tubes with a wall thickness of 0.3~1.2 mm, distributed between the close-packed CuNb single-core rods 7 and Sn rods 6, and the internal gaps of each level of Cu tubes are filled with Cu rods with a diameter of Φ = 1.0 mm. The filling rate of the multi-level CuNb composite structure is 81~ 95%.

Further, in the multi-level CuNb composite structure, each CuNb single-core rod 7 is closely in contact with a maximum of 4 CuNb single-core rods 7 and a minimum of 1 Sn rod 7, and there are a maximum of 4 layers of CuNb single-core rods 7 along the radial direction between each level of Cu tubes.

Further, in the multi-level CuNb composite structure, the Nb/Sn atomic ratio is 2.7~3.1, the Sn/(Sn + Cu) atomic ratio is 0.23~0.37, the volume ratio of Nb is 45~59%, and the volume ratio of Sn is 22~27%.

Further, the outer diameter Φ of the multi-level CuNb composite structure is 75~200 mm.

Further, the elongation rate of each pass of reverse stretching is less than or equal to 30%, and the straightening accuracy is 0.1~0.3 mm/m.

Further, after processing, the diameter Φ of the CuNb composite rod is 3~6.6 mm.

### Example 1

The above describes the preparation method steps 1) to 5) for the CuNb composite rod used in the low-loss Nb₃Sn superconducting wire. This implementation example further elaborates on this preparation method.

Specifically, in this implementation example, in step 1), the diameter of the Nb rod 9 is 0.92mm, and the CuNb single-core rod 7 is hexagonal with an edge dimension of 1.0mm and a copper ratio of 0.1.

In step 2), the 1st-level Cu tube 1 in the 1-level CuNb composite structure is an oxygen-free copper tube with a wall thickness of 0.3mm.

In step 3), the 2nd-level Cu tube 2 in the 2-level CuNb composite structure is an oxygen-free copper tube with a wall thickness of 0.3mm.

In step 4), a 5-level CuNb composite structure is obtained, where the 5th-level Cu tube 5 is an oxygen-free copper tube with a wall thickness of 0.6mm, and the 3rd-level to 4th-level Cu tubes are oxygen-free copper tubes with a wall thickness of 0.3mm; the outer diameter of the 5-level CuNb composite structure is 75mm, the Nb/Sn atomic ratio is 3.1, the Sn/(Sn + Cu) atomic ratio is 0.23, the Nb volume percentage is 45.1%, the Sn volume percentage is 22%, and the filling rate is 95%.

In step 5), after processing, the diameter of the CuNb composite rod is Φ = 3mm.

### Example 2

The steps 1) to 5) of the preparation method for the CuNb composite rod used in the low-loss Nb₃Sn superconducting wire as described above have been explained. This example further elaborates on the preparation method.

Specifically, in this example, in step 1), the diameter of the Nb rod 9 is 0.92mm, and the CuNb single-core rod 7 is circular with a diameter of 2.2mm and the copper ratio is 0.32.

In step 2), the 1st-level Cu tube 1 in the 1-level CuNb composite structure is an oxygen-free copper tube with a wall thickness of 0.6mm.

In step 3), the 2nd-level Cu tube 2 in the 2-level CuNb composite structure is an oxygen-free copper tube with a wall thickness of 0.6mm.

In step 4), a 5-level CuNb composite structure is obtained, where the 5th-level Cu tube 5 is an oxygen-free copper tube with a wall thickness of 1.2mm, and the 3rd-level to 4th-level Cu tubes are oxygen-free copper tubes with a wall thickness of 0.6mm; the outer diameter of the 5-level CuNb composite structure is 200mm, the Nb/Sn atomic ratio is 2.7, the Sn/(Sn + Cu) atomic ratio is 0.33, and the Nb volume percentage is 59.1%, the Sn volume percentage is 27%, and the filling rate is 81%.

In step 5), after processing, the diameter of the CuNb composite rod is Φ = 6.6mm.

### Example 3

The steps 1) to 5) of the preparation method for the CuNb composite rod used in the low-loss Nb₃Sn superconducting wire as described above have been explained. This example further elaborates on the preparation method.

Specifically, in step 1) of this example, the diameter of the Nb rod 9 is 1.8mm, and the CuNb single-core rod 7 is hexagonal with opposite side dimensions of 2.8mm, and the copper ratio is 0.21.

In step 2), the 1st-level Cu tube 1 in the 1-level CuNb composite structure is an oxygen-free copper tube with a wall thickness of 0.6mm.

In step 3), the 2nd-level Cu tube 2 in the 2-level CuNb composite structure is an oxygen-free copper tube with a wall thickness of 0.3mm.

In step 4), a 5-level CuNb composite structure is obtained, where the 5th-level Cu tube 5 is an oxygen-free copper tube with a wall thickness of 1.2mm, and the 3rd-level to 4th-level Cu tubes are oxygen-free copper tubes with a wall thickness of 0.3mm; the outer diameter of the 5-level CuNb composite structure is 200mm, the Nb/Sn atomic ratio is 3.0, the Sn/(Sn + Cu) atomic ratio is 0.37, and the Nb volume percentage is 55.7%, the Sn volume percentage is 25.5%, and the filling rate is 86%.

In step 5), after processing, the diameter of the CuNb composite rod is Φ = 4.8mm.

### Example 4

This example provides the performance test results of the CuNb composite rods prepared in Examples 1 to 3. The CuNb composite rods prepared in Examples 1 to 3 are assembled and processed into Nb₃Sn superconducting wires, and the test results of their current-carrying performance are shown in Figure 4. The critical currents of the Nb₃Sn superconducting wires prepared by the CuNb composite rods provided in Examples 1 to 3 are 621A (4.2K, 12T), 648A (4.2K, 12T), and 677A (4.2K, 12T), which are comparable to the current-carrying capacity of the high-performance Nb₃Sn superconducting wires prepared by the existing technology.

The magnetic hysteresis loss of the high-performance Nb₃Sn superconducting wires prepared by the existing technology is usually around 1000~2000 mJ/cm³ (4.2K, 3T). The magnetic hysteresis loss of the Nb₃Sn superconducting wires prepared by using the CuNb composite rods provided in Examples 1 to 3 are 586 mJ/cm³ (4.2K, 3T), 510 mJ/cm³ (4.2K, 3T), and 632 mJ/cm³ (4.2K, 3T), and the latter has significantly lower magnetic hysteresis loss.

The above-mentioned examples are only some of the embodiments of the present disclosure, rather than all the embodiments. The detailed description of the embodiments of the present disclosure is not intended to limit the scope of protection of the present disclosure, but merely represents the selected embodiments of the present disclosure. Under the conditions as per the inventive concept of this disclosure, all the related deductions and substitutions made by ordinary technicians in the field, and all other embodiments obtained without making any creative efforts, are all within the scope of protection of this disclosure.

## Claims

1. A method for preparing a CuNb composite rod for a low-loss Nb₃Sn superconducting wire, **characterized in that**, comprising:
1) inserting Nb rods respectively into small Cu tubes to prepare CuNb single-core rods;
2) close-packing the CuNb single-core rods and Sn rods into a 1st-level Cu tube to form a 1-level CuNb composite structure;
3) close-packing the CuNb single-core rods and Sn rods around the outside of the 1-level CuNb composite structure and then inserting the CuNb single-core rods, the 1-level CuNb composite structure and the Sn rods into a 2ed-level Cu tube to form a 2-level CuNb composite structure;
4) repeating the assembly method in step 3) multiple times to prepare multi-level CuNb composite structure;
5) multi-pass reverse stretching and straightening the multi-level CuNb composite structure, and then cutting the multi-level CuNb composite structure to a fixed length to obtain CuNb composite rods.

2. The method for preparing a CuNb composite rod for a low-loss Nb₃Sn superconducting wire of claim 1, wherein in step 1), the Nb rod is circular, with a diameter of 0.92~1.8 mm;
the CuNb single-core rod is hexagonal or circular;
the diameter or diagonal dimension of the CuNb single-core rod is 1.0~2.8 mm, and the copper ratio is 0.1~0.32.

3. The method for preparing a CuNb composite rod for a low-loss Nb₃Sn superconducting wire of claim 1, wherein the Sn rod is composed of a SnCu alloy with 0.5% Cu atoms; the Cu tube is an oxygen-free copper tube, with a wall thickness of 0.3~1.2 mm, distributed between the close-packed CuNb single-core rods and Sn rods; the internal gap between each level of Cu tube is filled with Cu rods with a diameter of Φ = 1 mm, and the filling rate of the multi-level CuNb composite structure is 81~95%.

4. The method for preparing a CuNb composite rod for a low-loss Nb₃Sn superconducting wire of claim 1, wherein in the multi-level CuNb composite structure, each CuNb single-core rod is closely in contact with a maximum of 4 other CuNb single-core rods and a minimum of one Sn rod, and there are a maximum of 4 layers of CuNb single-core rods along the radial direction between each level of Cu tube.

5. The method for preparing a CuNb composite rod for a low-loss Nb₃Sn superconducting wire of claim 1, wherein in the multi-level CuNb composite structure, the Nb/Sn atomic ratio is 2.7~3.1, the Sn/(Sn + Cu) atomic ratio is 0.23~0.37, the volume ratio of Nb is 45~59%, and the volume ratio of Sn is 22~27%.

6. The method for preparing a CuNb composite rod for a low-loss Nb₃Sn superconducting wire of claim 1, wherein the outer diameter Φ of the multi-level CuNb composite structure is 75~200 mm.

7. The method for preparing a CuNb composite rod for a low-loss Nb₃Sn superconducting wire of claim 1, wherein in step 5), the elongation rate of each pass of reverse stretching is less than or equal to 30%, and the straightening accuracy is 0.1~0.3 mm/m.

8. The method for preparing a CuNb composite rod for a low-loss Nb₃Sn superconducting wire of claim 1, wherein after processing, the diameter Φ of the CuNb composite rod is 3~6.6 mm.

9. A CuNb composite rod for low-loss Nb₃Sn superconducting wire, preparing by any one of the methods of claims 1 to 8.
